Europäisches Patentamt

European Patent Office

Office européen des brevets

(19)

(11) Publication number:

**0 389 712**

**A2**

# (12) EUROPEAN PATENT APPLICATION

(21) Application number: **89311612.9**

(51) Int. Cl.⁵: **G21C 15/18**

(22) Date of filing: **09.11.89**

(30) Priority: **27.03.89 US 328974**

(43) Date of publication of application:
**03.10.90 Bulletin 90/40**

(84) Designated Contracting States:
**CH DE ES IT LI NL SE**

(71) Applicant: **GENERAL ELECTRIC COMPANY**
**1 River Road**
**Schenectady, NY 12345(US)**

(72) Inventor: **Gou, Perng-Fei**

19606 Via Escuela Drive
Saratoga California 95070(US)
Inventor: **Wade, Gentry Everett**
P.O. Box 4333
**Sunriver Oregon 37707(US)**

(74) Representative: **Smith, Thomas Ian Macdonald**
**et al**
**London Patent Operation G.E. Technical**
**Services Co. Inc. Burdett House 15-16**
**Buckingham Street**
**London WC2N 6DU(GB)**

(54) **Multiple use of water in safety system for nuclear reactor plants.**

(57) A system for transferring water throughout the numerous components of a containment housing (12) of a water cooled nuclear fission reactor plant, e.g., for electrical power generators, is disclosed.

The system comprises a fluid communication network (40,48,50,53,54, 60,64,) and flow control means (44,46,52,55,56,62).

CONCRETE – ALL DOUBLE WALLS

EP 0 389 712 A2

The Government of the United States has rights in this invention under Contract No. DE-AC03-86SF16563

This invention relates to maintenance, operation and safety measures for water cooled, nuclear fission reactors of the type commonly employed in the commercial generation of electrical power. The invention entails a practical means for safely dealing with a variety of mishaps, unintended events, and maintenance and inspection activities in the operation of a nuclear reactor plant.

Safety in the operation of nuclear fission reactor plants has become a matter of paramount concern in recent years. A mishap of primary concern is the loss of water coolant within the reactor pressure vessel containing the heat producing fissionable fuel, or in other locations and/or functions depending upon cooling with water.

Moreover, in a nuclear fission reactor plant, water frequently performs a multiple function role, that of a thermal energy transferring medium for cooling the fuel, and also a shielding function against radiation, among others. Thus, an ample supply of available water is a fundamental requirement in the safe and effective operation of a nuclear fission reactor plant.

The water is normally located in several pools in the reactor building. During specific maintenance, inspection and operating conditions it may be necessary to transfer water from or to a specific pool. Utilizing existing pools of water within the reactor building or containment for temporary storage of this water, which may contain slight amounts of contamination, can reduce or eliminate the costs necessary to clean up the water and precludes the need to release water to the reactor environs.

A typical water cooled and moderated nuclear fission reactor plant facility, such as a so-called boiling water reactor, comprises two or more significant chambers containing substantial quantities of water within and around its containment structure, such as a suppression pool, a gravity drain cooling pool, a passive containment cooling pool, a makeup pool, an isolation condenser or post accident cooling heat exchanger pool, and an upper pool. The suppression pool is located in the lower portion of the reactor plant containment housing and generally comprises an annular chamber between the outer wall of the containment and the central drywell surrounding the reactor pressure vessel. The function of the suppression pool is to provide a large volume of water for condensing and cooling hot high pressure steam released or leaked from the reactor pressure vessel and its related pressurized system.

The gravity drain cooling pool can supply water by gravity head to cool the reactor after a loss of coolant accident. The passive containment cooling system may contain a large water mass of water connected to cooled heat exchange surface to remove heat from the containment after a loss of coolant accident. Makeup water for the passive containment cooling system can be provided by a makeup pool.

For isolation events involving cooling the reactor core of fuel or long term cooling of the containment, isolation condensers or post accident heat exchangers may be included in the design. These cooling devices can be immersed in pools near the reactor containment to provide cooling or a separate gravity feed cooling water tank may be located in the reactor building to provide a passive long term supply of cooling water.

The upper pool is located above the reactor pressure vessel and extends over the top of the reactor pressure vessel above the containment housing. This large pool is segmented into several compartments with each designed for use in one or more of the following specific distinctive functions, such as steam separator storage, steam dryer storage, isolation condenser cooling, reactor cavity area, fuel storage, and fuel transfer area. Typically the upper pool is constructed as one continuous large pool extending across the top of the housing over the pressure vessel and separated into appropriate compartments with removable waterproof gates or sectional dams. A continuous pool enables the transferring of material or components between the compartmentized pools throughout the continuous overall pool while they are maintained under water for radiation shielding purposes. On the other hand, the gates or sectional dams permit draining individual compartments or sections of the upper pool for maintenance of the reactor and equipment.

This invention comprises a versatile and effective system for enhancing the quantities of water available for emergency service in the operation of a nuclear fission reactor plant. The system of the invention comprises a practical and flexible arrangement for consolidating the water from a multiplicity of components or uses, and/or rapidly transferring water to and from one component or use to another.

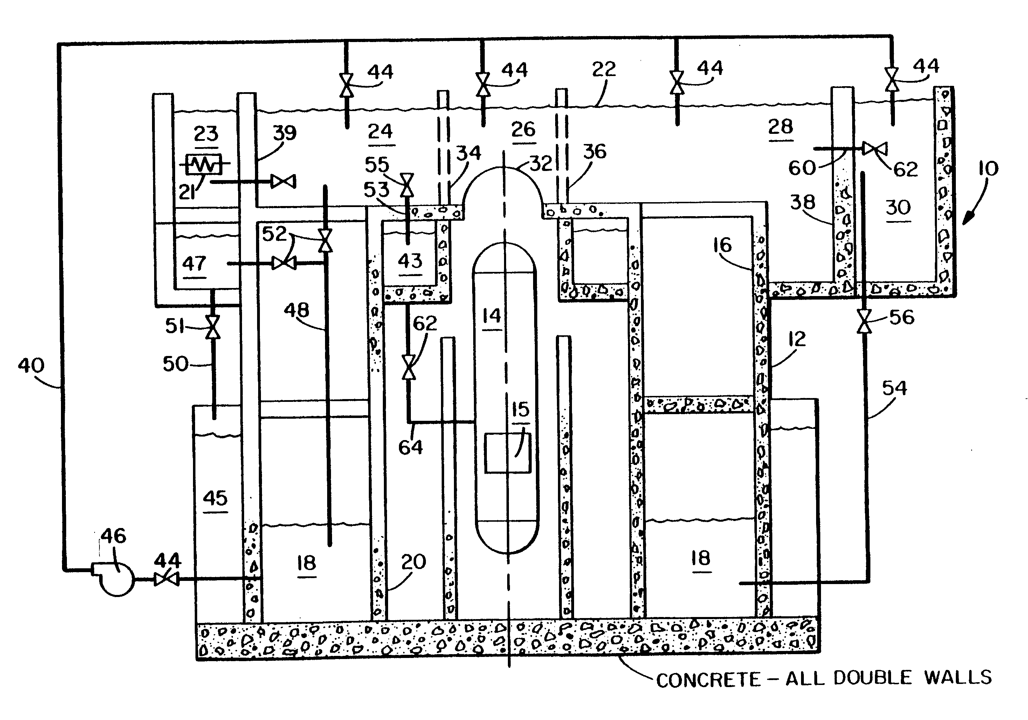

The accompanying drawing is a diagrammatic cross-sectional view illustrating portions of a nuclear reactor plant including the containment structure housing the pressure vessel and significant chambers related to the invention.

Referring to the drawing, a typical water cooled, nuclear fission reactor plant 10 for producing steam to be used to generate electricity, includes a containment structure 12 housing a reactor pressure vessel 14 enclosing the heat creating core of fissionable fuel 15 therein. The containment structure 12 comprises an outer wall 16 of concrete with a fluid sealing steel liner, a base or floor and an overhead roof. Commonly the containment structure 12 and its outer wall 16 are circular in cross-section, and the reactor pressure vessel containing the core of fuel is located generally central therein, as shown.

In addition to the fuel containing pressure vessel 14, the containment structure of a nuclear reactor plant houses or supports a number of chambers or vessels which are designed to perform specific functions related to the reactor operation, or to harbor relevant equipment.

Commercial electrical power generating nuclear fission reactor plants, such as the water cooled, steam producing boiling water reactors, may include two or more main water containing chambers or vessels. One consists of the suppression pool chamber 18 which is located in a lower area of the containment housing 12, and at least partially surrounds the bottom portion of the pressure vessel 14, or the space underneath the pressure vessel. The suppression pool chamber 18 is usually defined by the outer wall 16 of the containment structure and a generally circular wall 20 which is intermediate the outer wall 16 and the central pressure vessel 14, and more or less concentric with the outer wall 16.

The suppression pool chamber 18 contains a pool of water and is primarily utilized to condense and cool high pressure steam released or escaped from the pressure vessel 14 and its adjunct pressurized circulating system. To provide an adequate heat sink for this function, the suppression pool chamber 18 is constructed large enough to contain substantial quantities of water. In addition to suppressing steam pressure and providing a cooling heat sink for such occurrences as a loss of coolant event, the suppression pool water can be used for emergency fuel core cooling, safety relief valve discharge heat sink or scrubbing for a severe accident.

Another principal chamber or vessel in the containment of this type of nuclear reactor, consists of an upper pool 22. The upper pool 22, which serves a variety of functions, commonly constitutes a large generally rectangular vessel which substantially extends across the upper area of reactor containment housing 12 and bridges the upper end of the central pressure vessel 14. A typical arrangement or division into multiple compartments for an upper pool 22 includes a pool 24 designated for the storage of the reactor steam dryer and separator when removed from within the pressure vessel 14 during refueling and/or maintenance. The section or chamber of the upper pool 22 directly over the reactor pressure vessel 14 is designated the reactor well 26. The section of the upper pool 22 adjoining the reactor well 26 comprises the fuel pool 28, and the next compartment comprises a cask pit pool 30. One section of the upper pool 22 may include the isolation condenser 21 in cooling pool 23 to provide for cooling the reactor during transients over for cooling the containment after a loss of cooling event.

Construction of the upper pool 22 as one continuous vessel structure separated into individual compartments or sections with removable waterproof gates or water damming locks, enables the transfer of materials such as fuel or radioactive equipment while retained under water for radiation shielding purposes. However, the gates or locks provide for draining individual compartments or sections for the upper pool 22 for reactor and equipment services or maintenance.

The varied functions of the upper pool 22 several components, or compartments, are as follows. The dryer-separator pool 24, as noted, comprises an underwater and in turn radiation shielding storage site for the reactor pressure vessel steam dryer and steam separator, and other miscellaneous radioactive items from within the reactor pressure vessel during periods of shutdown and opening of the pressure vessel 14 for refueling and/or maintenance service. This pool can also be used for underwater service or repair work on radioactive components from within the reactor pressure vessel 14. This pool may be drained and filled during reactor servicing with water from the suppression pool.

The reactor well pool 26, which is above the reactor pressure vessel 14, can be closed off from the other compartments of the upper suppression pool 22 with the gates and drained to provide for access to the reactor pressure vessel 14 upon removal of the drywell head 32. This operation is a prerequisite to opening the reactor pressure vessel 14 by removal of the vessel head for refueling and maintenance services of internal components. Water from the reactor well pool can be stored temporarily in the suppression pool and returned to the reactor well when deflooding/flooding is required.

The fuel pool 28 constitutes an underwater site for the storage of new fuel and assembly of fuel units, spent fuel storage, miscellaneous item storage and work underwater on components from within the reactor pressure vessel.

The cask pit pool 30 provides an area for loading spent fuel and other radioactive materials or equipment into transportation containers for shipment off the plant site.

As shown in the drawing, waterproof gate 34 separates the steam dryer-separator pool 24 and the reactor well pool 26, waterproof gate 36 separates the reactor well pool 26 and fuel pool 28, and a wall 38, which includes an operable gate, separates the fuel pool 28 and cask pit pool 30. A solid wall 39 is provided between the dryer separator storage pool 24 and the isolation condenser cooling pool 23. The upper containment pool 22 can be divided into more or less compartments or sections with operable gates or permanent walls depending upon the reactor design and needed functions.

The gravity drain cooling system for the reactor has a separate gravity drain pool 43 inside the containment to supply water to the reactor 14 for cooling under accident condition via fluid connecting conduit 64 an control valve 66.

Heat may be removed from the containment 12 by a passive containment cooling system comprising pools 45 and 47. The primary element of this cooling system may be the larger pool of water 45 which is heated as it absorbs heat energy from the containment and eventually boils to release the decay heat energy to the environs. The water in the passive containment cooling system 45 can be replenished from the refill pool 47 thereby assuring containment cooling for an extended period of time after an accident.

In accordance with this invention, the several chambers or vessels constituting pools or bodies of water, in particular the suppression pool chamber 18, and the upper pool 22, the passive containment cooling system 45 and the gravity drain cooling pool 43 may be interconnected by means of a network of fluid conduits having flow control valves. The interconnecting network of fluid conduits provides for fluid transfer between the respective water pools or their chamber or vessels by means of either gravity flow or pump forced flow, as appropriate or necessary. Thus, with such a system significant quantities of water can be made available and transferred to a location of application rapidly and effectively.

Specifically a fluid conduit 40, such as a pipe, provides fluid communications between the suppression pool 18 and the steam dryer-separator pool 24, reactor well 26, fuel storage pool 28 and cask pit pool 30 of the upper pool 22. Fluid conduit 40 includes valves 44 and pump 46 whereby fluid can be transferred from the suppression pool 18 up into either the steam dryer-separator pool 24 reactor well pool 26, fuel storage pool 28 or cask pit pool 30 compartments of the upper pool 22.

Fluid conduit 48 provides fluid communication between the upper pool 22 compartments, such as for example including the steam dryer-separator pool 24 and/or the reactor well pool 26, and the suppression pool 18, or refill pool 47. Valves 52 in fluid conduit 48 enable flow control between the several chambers or compartments.

Fluid conduit 54 makes fluid communication between cask pit pool 30 of the upper containment pool 22 and the suppression pool 18. Valve 56 provides for flow control between these pools or chambers for gravity flow in transferring water from one to the other.

Fluid conduit 60, with valve 62, provides fluid communication between cask pit pool 30 and the fuel pool 28, both of the upper containment pool 22 for transfer in either direction.

Additionally fluid conduits 50 provides fluid communication between the refill pool 47 and the passive containment cooling system 45. Valves 51 control the fluid flow between the pools.

Accordingly, the interconnecting network of fluid conduits with their flow control valves, and pump for forced conveyance when appropriate, enable the transfer, between one component or use and another, of the large total volumes of water available throughout the system as needs for coolant or shielding water may occur at different locations. Such an arrangement enhances the operating flexibility and versatility of the nuclear reactor plant and substantially improves the safety factors.

Thus there has been provided a safety system enabling the maximum utilization of multiple available sources of water throughout a nuclear fission reactor plant for emergency service or other applications, while at the same time enhancing operation, maintenance and inspection of the reactor and the reactor water pools.

A multiplicity of sources of water dispersed throughout the nuclear fission reactor plant are integrated in an effective and practical arrangement whereby water can be drawn from any one source or combination of sources for routine or emergency service.

**Claims**

1. A water cooled nuclear fission reactor comprising a containment structure housing a reactor pressure vessel enclosing a core of fissionable nuclear fuel generally central therein, said containment structure having an upper pool system for retaining water located adjacent to the upper portion of the reactor pressure vessel and extending above said pressure vessel, said upper pool system being divided into several interconnected compartments, said containment structure additionally having a lower pool system for retaining water substantially surrounding a lower portion of the reactor pressure vessel and comprising a suppression pool for cooling and condensing of steam, a network of fluid conduits connecting the upper pool system with the lower pool system in fluid communication and including flow control valve and pumping means whereby water can be transferred between the upper pool system and the lower pool system.

2. The water cooled nuclear fission reactor of claim 1, wherein the upper pool system comprises a multiplicity of compartments including a steam dryer and separator storage pool and the network of fluid conduits comprises a fluid conduit providing fluid communication between said steam dryer and separator pool and the suppression pool.

3. The water cooled nuclear fission reactor of claim 1, wherein the upper pool system comprises a multiplicity of compartments including a reactor well pool and the network of fluid conduits comprises a fluid conduit providing fluid communication between said reactor well pool and the suppression pool.

4. The water cooled nuclear fission reactor of claim 1, wherein the upper pool system comprises a multiplicity of compartments including a fuel pool and the network of fluid conduits comprises a fluid conduit providing fluid communication between said fuel pool and the suppression pool.

5. The water cooled nuclear fission reactor of claim 1, wherein the upper pool system comprises a multiplicity of compartments including a cask pit pool and the network of fluid conduits comprises a fluid conduit providing fluid communication between said cask pit pool and the suppression pool.

6. A water cooled nuclear fission reactor comprising a containment structure housing a reactor pressure vessel enclosing a core of fissionable nuclear fuel positioned generally central therein, said containment structure having an upper pool system for retaining water located adjacent to the upper portion of the central positioned reactor pressure vessel, said upper pool system being divided into several interconnected compartments including a steam dryer and separator pool, a reactor well pool, a fuel pool and a cask pit pool, said containment structure having a lower pool system for retaining water substantially surrounding a lower portion of the generally central reactor pressure vessel and comprising a suppression pool for cooling and condensing steam, a network of fluid conduits connecting the compartments of the upper pool system with the lower pool system comprising the suppression pool in fluid communication and including flow control valves and pumping means whereby water can be transferred between the compartments of the upper pool system and the lower pool system suppression pool.

7. The water cooled nuclear fission reactor of claim 6, wherein a fluid conduit connects the steam dryer and separator pool in fluid communication with the suppression pool.

8. The water cooled nuclear fission reactor of claim 6, wherein a fluid conduit connects the reactor well pool in fluid communication with the suppression pool.

9. The water cooled nuclear fission reactor of claim 6, wherein a fluid conduit connects the fuel pool in fluid communication with the suppression pool.

10. The water cooled nuclear fission reactor of claim 6, wherein a fluid conduit connects the cask pit pool in fluid communication with the suppression pool.

11. The water cooled nuclear fission reactor of claim 1 or 6, wherein the upper pool system comprises a multiplicity of compartments including a cooling pool and the network of fluid conduits comprises a fluid conduit providing fluid communication between said cooling pool and the suppression pool.

12. The water cooled nuclear fission reactor of claim 1 or 6, wherein the system comprises an upper refill pool and a lower passive containment cooling pool, and said pools having a fluid conduit providing fluid communication therebetween.

13. The water cooled nuclear fission reactor of claim 2 or 6, wherein the system comprises an upper gravity drain pool having a fluid conduit providing fluid communication with the steam dryer and separator storage pool.

14. The water cooled nuclear fission reactor of claim 6, wherein a fluid conduit connects all pools of the upper pool system in fluid communication.

CONCRETE – ALL DOUBLE WALLS